# EUROPEAN PATENT APPLICATION

(11) **EP 1 091 347 A2**
(43) Date of publication of application: **11.04.2001**
(21) Application number: 00119088.3
(22) Date of filing: 02.09.2000
(51) Int. Cl.: G10L 15/26, G10L 15/22

(54) **Multi-stage speech recognition**

(30) Priority: 15.09.1999 DE 19944325
(71) Applicant: DEUTSCHE THOMSON-BRANDT GMBH, 78048 Villingen-Schwenningen (DE)
(72) Inventor: Schröder, Ernst F., 30655 Hannover (DE)
(74) Representative: Rittner, Karsten, Dr.

(57) **Abstract**

Voice control systems are used in diverse technical fields. In this case, the spoken words are detected by one or more microphones and then fed to a speech recognition system. The known speech recognition systems have the disadvantage that the user must first activate speech recognition, for example by pressing a button provided for this purpose on the remote control. According to the invention, firstly a simple speech recognition process is carried out and then one or a plurality of more complicated speech recognition processes are carried out. In this case, the simple speech recognition process is largely independent of dialect and speaker but has only a small vocabulary and does not enable recognition of a word order, whereas at least one of the more complicated speech recognition processes is largely dependent on dialect and speaker but has an extensive vocabulary and/or enables recognition of a word order. The simple speech recognition process is advantageously used for switching on one of the more complicated speech recognition processes.

## Description

The invention relates to a method and an apparatus for voice control, in particular for controlling devices appertaining to consumer electronics.

### Prior art

Voice control systems are used in a multiplicity of technical fields. In this case, the spoken words are firstly detected as sound signals, usually by one or more microphones, and are then fed to a speech recognition system. In this case, the speech recognition is usually based on an acoustic model and a speech model. The acoustic model utilizes a large number of speech patterns, mathematic algorithms being used to indicate the words which acoustically best match a spoken word. The speech model in turn is based on an analysis which uses a multiplicity of document samples to ascertain the context in which, and how often, certain words are normally used. Such speech recognition systems make it possible to recognize not only individual words but also fluently spoken sentences with high recognition rates. However, the recognition rate drops drastically when non-negligible background noises are present.

The robustness with respect to such acoustic interfering influences can be increased in various ways. Thus, in dictation systems for computers, a microphone on a headset frame is fastened directly in front of the speaker's mouth. In these systems, a very constant signal and hence an, in some instances, appreciable recognition rate can be achieved only by the direct proximity to the mouth. It is likewise known to control a television set by speaking the operational commands into the microphone which is integrated in a remote control. However, the remote control has to be held directly in front of the user's mouth in this case as well.

The known speech recognition systems have the disadvantage, however, that the user must firstly activate the voice recognition, for example by pressing a button provided for this purpose on the remote control.

### Invention

The invention is based on the object of specifying a method for voice control which enables voice input from a relatively large distance without prior activation by the user. This object is achieved by means of the method specified in Claim 1.

The invention is based on the further object of specifying an apparatus for carrying out the method according to the invention. This object is achieved by means of the apparatus specified in Claim 6.

In principle, the method for speech recognition, in which sound signals corresponding to voice commands are converted into electrical signals which are converted into operational commands by a speech recognition arrangement, consists in the fact that firstly a simple speech recognition process is carried out and then one or a plurality of more complicated speech recognition processes are carried out.

Preferably, the simple speech recognition process is largely independent of dialect and speaker but has only a small vocabulary and does not enable recognition of a word order, whereas at least one of the more complicated speech recognition processes is largely dependent on dialect and speaker but has an extensive vocabulary and/or enables recognition of a word order.

The simple speech recognition process is advantageously used for switching on one of the more complicated speech recognition processes.

Likewise, it may be advantageous if the simple speech recognition process serves for identifying the speaker.

Finally, the simple speech recognition process may advantageously serve for muting or reducing the volume of an audio reproduction.

### Drawing

An exemplary embodiment of the invention is described with reference to the drawing.

The drawing shows a schematic sequence of the method according to the invention.

### Exemplary embodiments

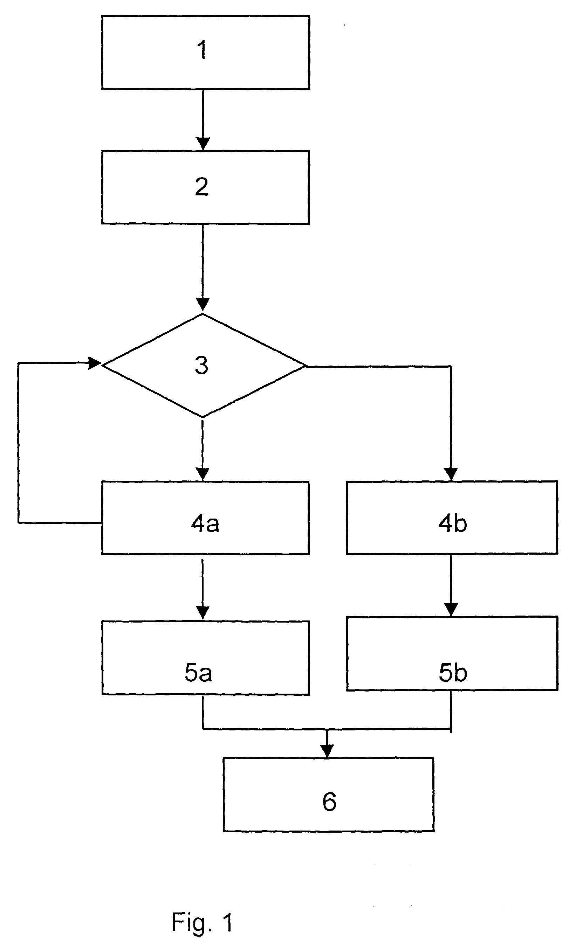

Figure 1 schematically illustrates the sequence of a method according to the invention in the form of a flow diagram. Firstly, in a first method step 1, a sound signal is converted into electrical signals by one or more microphones, with the result that an analogue voice signal is present. The latter is then converted into a digital voice signal by an analogue-to-digital converter in a second method step 2. A check is then made in a further step 3 to determine whether speech recognition has already been effected beforehand by a simple speech recognition unit. If this is the case, the method steps 4b, 5b, 6 are implemented, otherwise the method steps 4a, 5a, 6. Features which are as typical as possible of the individual sounds of the speech and are robust with respect to interference and variations in pronunciation are obtained from the digitized acoustic signal by respective signal processing and analysis 4a, 4b. In the exemplary embodiment illustrated, this extraction of features is effected separately for the various speech recognition units, but can also be effected jointly. The actual speech recognition is then effected in the respective method steps 5a and 5b. The signals obtained by the respective signal processing and analysis 4a are fed to a primitive speech recognition unit 5a, which investigates the signal with regard to one or more predetermined commands. This speech recognition unit thus requires only a small vocabulary and is to the greatest possible extent independent of dialect and speaker. If only a predetermined voice command is detected, such as e.g. "Hey, Telly!" or "Turn On!", then this is noted, so that the further processing is effected by the respective signal processing and analysis 4b and the speech recognition unit 5b. The latter has an extensive vocabulary and is able also to recognize word orders, but becomes active only after a command has been recognized by the simple speech recognition unit 5a. With respect to the recognized commands and/or work orders, in method step 6 the corresponding commands are then determined and used for controlling the voice-controlled system, e.g. for menu control or navigation.

The number of speech recognition units is not restricted to two, rather it is equally conceivable also to use a hierarchical arrangement of more than two speech recognition units. Thus, by way of example, the first speech recognition unit may be utilized merely for activating the speech recognition process, for which only a very small vocabulary is necessary. A second speech recognition unit with an already larger vocabulary can then be used for driving or selecting different menu items. A further speech recognition unit can then be activated under the respective menu item. This third speech recognition unit can then have a very extensive vocabulary in order, in this way, to enable any desired kinds of inputs, for example the inputting of a title of a desired transmission or an Internet address in the case of Web TV.

Likewise, the first speech recognition unit may additionally or exclusively be utilized for muting the reproduction of a device, such as a television set for example, or for reducing the volume. Furthermore, one of the hierarchically arranged speech recognition units can be utilized for identifying the speaker. This is of interest for example for access control, in particular parental lock, or for the selection of personal setting parameters for example for the basic settings of an Electronic Programme Guide. Finally, it is also conceivable for the first speech recognition unit merely to react to a predetermined turn-on command, but in a wide variety of languages. Different second or further speech recognition units are then activated in a manner dependent on the detected language.

The different speech recognition units or different stages of the speech recognition process can be implemented using separate algorithms or the separate hardware units. Equally, however, it is also possible to implement this with a single speech recognition machine by the selection of different sets of parameters.

For the detection of the voice signals, an individual microphone or alternatively a microphone array composing two or more microphones may be provided. The microphone array may be integrated in a television receiver, for example. The microphones convert the detected sound signals into electrical signals which are amplified by amplifiers, converted into digital signals by AD converters and are then fed to a signal processing unit. The latter can take account of the respective whereabouts of the user by different scaling or processing of the detected sound signals. Furthermore, the microphone signals can also be corrected with regard to the sound signals output by the loudspeakers. The signal processed in this way is then fed to the speech recognition unit according to the invention, which, as described above, converts the electrical signals into words. Finally, the commands corresponding to these words are then fed to a system manager for controlling the system.

The invention can be used for the voice-activated remote control of a wide variety of appliances appertaining to consumer electronics, such as e.g. of TV sets, video recorders, DVD players, satellite receivers, TV/video combinations, audio devices or complete audio systems, but likewise of personal computers or of domestic appliances.

## Claims

1. Method for multi-stage speech recognition, in which sound signals corresponding to voice commands are converted into electrical signals which are converted into operational commands by a speech recognition arrangement, **characterized** in that firstly a simple speech recognition process is carried out and then one or a plurality of more complicated speech recognition processes are carried out.

2. Method according to Claim 1, **characterized** in that the simple speech recognition process is largely independent of dialect and speaker but has only a small vocabulary and does not enable recognition of a word order, and at least one of the more complicated speech recognition processes is largely dependent on dialect and speaker but has an extensive vocabulary and/or enables recognition of a word order.

3. Method according to Claim 1 or 2, **characterized** in that the simple speech recognition process is used for switching on one of the more complicated speech recognition processes.

4. Method according to one of the preceding claims, **characterized** in that the simple speech recognition process serves for identifying the speaker.

5. Method according to one of the preceding claims, **characterized** in that the simple speech recognition process serves for muting or reducing the volume of an audio reproduction.

6. Apparatus for carrying out a method according to one of the preceding claims.
